# EUROPÄISCHE PATENTANMELDUNG

(11) **EP 3 640 620 A1**
(43) Veröffentlichungstag der Anmeldung: **22.04.2020**
(21) Anmeldenummer: 18201166.8
(22) Anmeldetag: 18.10.2018
(51) Int. Cl.: G01M 5/00, F16L 55/00, G01B 21/08, G01C 21/00, G01V 3/16

(54) **VERFAHREN ZUR DETEKTION DES VERLAUFS EINER UNTERIRDISCH VERLEGTEN ROHRLEITUNG MITTELS EINER LUFTGESTÜTZTEN ERFASSUNGSVORRICHTUNG**

(71) Anmelder: Siemens Aktiengesellschaft, 80333 München (DE)
(72) Erfinder: Birchbauer, Josef Alois, 8054 Seiersberg (AT); Liepe, Mike, 91334 Hemhofen (DE); Weiss, Roland, 91058 Erlangen (DE); Windisch, Claudia, 8565 St. Johann (AT)
(74) Vertreter: Maier, Daniel Oliver

(57) **Zusammenfassung**

Verfahren zur Detektion des Verlaufs einer unterirdisch verlegten Rohrleitung (1) mittels einer luftgestützten Erfassungsvorrichtung (2), wobei sich die Erfassungsvorrichtung (2) längs einer Flugtrajektorie (10-13) bewegt und entlang der Flugtrajektorie (10-13) Messdaten (100-105), welche jeweils Detektionsinformationen und Positionsinformationen umfassen, erfasst, wobei die Detektionsinformationen das Vorhandensein der Rohrleitung (1) an einem Ort beschreiben, und die Positionsinformationen die Position des Orts beschreiben, und die Flugtrajektorie (10-13) durch eine erste Flugbahn (11) definiert ist, welche die Erfassung von Messdaten (100-105) innerhalb eines vordefinierten Gebiets (3) erlaubt und bei Detektion des Vorhandenseins der Rohrleitung (1) mittels entsprechender Detektionsinformationen die erste Flugbahn (11) der Flugtrajektorie durch eine zweite Flugbahn (12) ersetzt wird.

## Beschreibung

Die Erfindung betrifft ein Verfahren zur Detektion des Verlaufs einer unterirdisch verlegten Rohrleitung mittels einer luftgestützten Erfassungsvorrichtung.

Die Erfindung betrifft ferner eine luftgestützte Erfassungsvorrichtung zur Detektion des Verlaufs einer unterirdisch verlegten Rohrleitung.

Die Lage von unterirdischen Rohrleitungen wie Pipelines für liquide Medien wie Gas, Öl, Wasser, etc. muss für Inspektionsaufgaben hochgenau bekannt sein, üblicherweise sind diese Pipelines und insbesondere die Lage ihrer Oberkante nach der Verlegung und Wiederherstellung des Erdreiches nicht mehr von außen einsehbar.

Der Grad der Überdeckung, der sogenannte "Depth of Cover" (DOC) oder Schichtdicke, ist die vertikale Distanz von der Oberseite der Pipeline bis zur Oberfläche des Erdbodens. Pipelines müssen zum Zeitpunkt ihrer Errichtung minimale gesetzliche Vorgaben erfüllen, welche auch die notwendige Überdeckung regeln können. Jedoch kann sich diese Überdeckung beispielsweise durch Grabungsarbeiten, Erosion, Kultivierung, Bautätigkeiten, Überschwemmungen, Bodenabsenkungen oder andere Umwelteinflüsse oder Einflüsse des Menschen im Lauf der Zeit ändern.

Bei der Neuverlegung von Pipelines werden diese während der Verlegung, also vor der Wiederaufschüttung des Erdreichs mittels zeitgemäßer Methoden in Katastergenauigkeit eingemessen. Ältere Pipelinebestände wurden bei der Verlegung in der Vergangenheit hingegen nicht in ausreichender Genauigkeit erfasst. Zudem kann es durch instabile Untergründe wie z.B. Moore, Wüstensand, etc. geschehen, dass sich die Lage der Pipeline im eingebetteten Untergrund verändert.

Aus dem Stand der Technik sind Methoden bekannt die Pipeline bzw. ihre metallische Struktur im Erdreich zu orten.

Dies geschieht erdoberflächennah beispielsweise mittels Handmessgeräten, wie sie von der CORROCONT Group vertrieben werden (http://www.corrocont.com/surveys/pipeline-locating-anddepth-measurement), was die Übertragung des eingekoppelten Messsignals und somit die Sensitivität der Messung begünstigt.

Weiter bekannte Verfahren für die interne Inspektion von Pipelines nutzen sogenannte Geomolche, die in die Pipeline eingebracht werden und durch den Strom des transportierten Mediums in der Pipeline fortbewegt werden. Die Bestimmung der Position des Geomolchs erfolgt durch Inertial-Messsysteme.

Diese Systeme sind mit dem Nachteil behaftet, dass sie eine Drift des Messergebnisses, also eine Fehlerfortpflanzung durch die inkrementelle Vorschubbestimmung aufweisen.

Dieses Fehlerverhalten kann mangels des Kontaktes zur Außenwelt nicht trivialerweise durch externe und somit absolute Messungen kompensiert werden, wobei insbesondere die zumeist metallische Struktur der Pipeline ein Hindernis darstellt, welche die Übertragung von Funksignalen (elektrischen Feldern) stört (Faraday 'scher Käfig).

Bekannt sind aus dem Stand der Technik wie beispielsweise aus https://en.wikipedia.org/wiki/Pigging an der Außenhaut der Pipeline angebrachte akustische, magnetische oder auf Funktechnik beruhende Ortungseinrichtungen, welche die Passage es Geomolchs detektieren können.

Diese Form von Sensorik ist aber gerade bei schlecht eingemessenen Altbeständen nicht vorhanden.

Ferner ist die Messgenauigkeit oft nicht ausreichend, um den Grad der Überdeckung der Rohrleitung sehr exakt bestimmen zu können. Die erforderliche Messgenauigkeit kann oft nur mit manuell aufwändigen und daher sehr teuren Mitteln erreicht werden.

Außerdem kann beispielsweise aufgrund einer instabilen politischen Situation in einem Land eine manuelle Vermessung für beteiligte Personen mit hohen Risiken beziehungsweise mit zusätzlichem Aufwand für deren Sicherheit verbunden sein.

Der Erfindung liegt die Aufgabe zugrunde, den Stand der Technik weiterzuentwickeln und insbesondere durch den Einsatz einer luftgestützten Erfassungsvorrichtung zur Detektion des Verlaufs einer unterirdisch verlegten Rohrleitung zu verbessern.

Diese Aufgabe wird mit einem Verfahren eingangs genannter Art gelöst, wobei sich die Erfassungsvorrichtung längs einer Flugtrajektorie bewegt und entlang der Flugtrajektorie Messdaten, welche jeweils Detektionsinformationen und Positionsinformationen umfassen, erfasst, wobei die Detektionsinformationen das Vorhandensein der Rohrleitung an einem Ort beschreiben, und die Positionsinformationen die Position des Orts beschreiben, und die Flugtrajektorie durch eine erste Flugbahn definiert ist, welche die Erfassung von Messdaten innerhalb eines vordefinierten Gebiets erlaubt und bei Detektion des Vorhandenseins der Rohrleitung mittels entsprechender Detektionsinformationen die erste Flugbahn der Flugtrajektorie durch eine zweite Flugbahn ersetzt wird.

Dadurch wird erreicht, dass mittels einer autonom fliegenden Erfassungsvorrichtung der Verlauf einer unterirdisch verlegten Rohrleitung auf eine zeit- und kostensparende Weise genau bestimmt werden kann.

Die luftgestützte Erfassungsvorrichtung kann beispielsweise ein unbemannt fliegendes Luftfahrzeug sein, welches in der Lage ist, autark - also ohne Steuerung von außen - eine Mission zu erfüllen. Als Mission wird allgemein eine Aufforderung zu einer bestimmten Handlung verstanden. Im gegenwärtigen Zusammenhang ist dies die Detektion des Verlaufs einer unterirdisch verlegten Rohrleitung mit einer hohen Genauigkeit.

Unbemannt fliegende Luftfahrzeuge können sogenannte "Micro Air Vehicles" (MAV) sein, also Kleindrohnen, die über genügend Tragkraft verfügen, um Bildaufzeichnungsgeräte oder andere Sensoren zu transportieren. Sie haben einen Aktionsradius von einigen Kilometern und können eine Flughöhe von mehreren hundert Metern erreichen.

Insbesondere "Vertical Take-Off and Landing Unmanned Aerial Vehicles" (VTOL UAV: Senkrecht startendes und landendes UAV) sind für derartige Missionen besonders gut geeignet. Durch die VTOL-Fähigkeit werden weder eine Start- bzw. Landebahn noch spezielle Start- oder Landevorrichtungen benötigt. Gleichzeitig ergibt sich oftmals die Möglichkeit zwischendurch zu schweben oder sogar zu landen um zu beobachten ("hover and stare").

Zur Erfassung von Detektionsinformationen können beispielsweise Magnetsensoren oder Infrarot-Sensoren eingesetzt werden. Weitere Sensortypen sind im Stand der Technik bekannt.

Rohrleitungen wie Pipelines für liquide Medien wie beispielsweise Öl, Wasser oder Gas sind meist aus einem metallischen Material hergestellt, welches mit einem, außerhalb der Rohrleitung angelegten Magnetfeld interagiert. Ferner kann durch Aufbringen eines Stromes auf die metallische Struktur der Pipeline ein Magnetfeld erzeugt werden, welches wiederum von einem Magnetsensor erfasst werden kann. Je nach Messverfahren kann sowohl ein Gleichstrom als auch ein Wechselstrom eingesetzt werden.

Infrarot-Sensoren können einen thermischen Unterschied zwischen der Rohrleitung, welche durch das durchströmende Medium eine Rohrtemperatur aufweist, und dem Erdreich, in welchem die Rohrleitung eingebettet ist und welches eine Bodentemperatur aufweist, den Verlauf der Rohrleitung im Boden detektieren beziehungsweise erfassten.

Zur Erfassung von Positionsinformationen der luftgestützten Erfassungsvorrichtung kann beispielsweise ein satellitengestütztes Positionierungssystem wie GPS und/oder Galileo mit entsprechenden Empfängern eingesetzt werden, aber auch Positionierungssysteme, welche auf der Verwendung von lokalen Funknetzwerken beruhen, und differenzielle Positionsdaten ergänzen, um die Positionierungsgenauigkeit zu verbessern.

In einer Weiterbildung der Erfindung ist es vorgesehen, dass die erste Flugbahn und/oder die zweite Flugbahn automatisch bestimmt wird. Mit anderen Worten kann die Bestimmung der ersten und/oder zweiten Flugbahn autonom in einer Rechenvorrichtung der Erfassungsvorrichtung erfolgen. Alternativ kann die erste Flugbahn einer Mission von einer Bodeneinheit bestimmt werden und anschließend an die luftgestützte Erfassungsvorrichtung durch ein drahtloses Kommunikationsmittel übertragen werden. Dabei kann die Mission eine ungefähre Eingrenzung des zu untersuchenden Gebiets vorsehen ("geo fence"), um die Mission auf ein Gebiet einzuengen, in welchem die Rohrleitung vermutet wird. Die Erfassungsvorrichtung kann ein Positionierungssystem mit einem entsprechenden Empfänger umfassen, wobei das Positionierungssystem eine jeweilige Position der Erfassungsvorrichtung in der geographischen Länge, Breite und Höhe während einer Mission bestimmt und die Rechnervorrichtung die aktuelle Position mit einem "geo fence" abgleicht und somit entsprechende Lenkung der Erfassungsvorrichtung angesteuert. Häufig wird eine Höhe über dem Meeresspiegel angegeben und nicht die Höhe über der Bodenoberfläche.

Es ist besonders günstig, wenn die zweite Flugbahn mittels einer Rechenvorrichtung der Erfassungsvorrichtung automatisch bestimmt wird. Dadurch kann die Erfassungsvorrichtung autonom und auf besonders einfache Weise eine Mission durchführen.

In einer Weiterbildung der Erfindung ist es vorgesehen, dass entlang der ersten Flugbahn eine Vielzahl an Messdaten erfasst werden, deren jeweilige Positionen untereinander einen durchschnittlichen ersten Abstand aufweisen, und entlang der zweiten Flugbahn eine Vielzahl an Messdaten erfasst werden, deren jeweilige Positionen untereinander einen durchschnittlichen zweiten Abstand aufweisen, wobei der erste Abstand größer als der zweite Abstand ist.

Dadurch wird erreicht, dass entlang der ersten Flugbahn eine erste Auflösung der Messung erzielt werden kann, und entlang der zweiten Flugbahn eine zweite Auflösung der Messung erzielt werden kann. Folglich kann die zweite Auflösung größer als die erste Auflösung sein.

In einer vorteilhaften Weiterbildung der Erfindung ist es vorgesehen, dass die erste Flugbahn in einer ersten Flughöhe durchgeführt wird, und die zweite Flugbahn in einer zweiten Flughöhe durchgeführt wird, wobei vorzugsweise die erste Flughöhe höher ist als die zweite Flughöhe.

Dadurch wird erreicht, dass entlang der ersten Flugbahn eine erste Auflösung der Messung erzielt werden kann, und entlang der zweiten Flugbahn eine zweite Auflösung der Messung erzielt werden kann. Folglich kann die zweite Auflösung größer als die erste Auflösung sein.

In einer Weiterbildung der Erfindung ist es vorgesehen, dass entlang der Flugtrajektorie eine Vielzahl an Messdaten erfasst werden, aus deren jeweiligen Detektionsinformationen bei Überschreiten eines jeweiligen Grenzwerts das Vorhandensein der Rohrleitung detektiert wird und aus den entsprechenden Positionen der Verlauf der Rohrleitung ermittelt wird, vorzugsweise mittels einem statistischen Verfahren.

Dadurch wird erreicht, dass mehrere einzelne Messdaten erfasst werden und mittels einer gemeinsamen Analyse der Verlauf der Rohrleitung ermittelt werden kann. Dadurch wird die Messung robuster gegenüber einzelnen Messungenauigkeiten.

Es ist günstig, wenn aus dem ermittelten Verlauf der Rohrleitung der weitere Verlauf der Rohrleitung prädiziert beziehungsweise extrapoliert wird und daraus eine dritte Flugbahn festgelegt wird, und die erste Flugbahn oder die zweite Flugbahn durch die dritte Flugbahn ersetzt wird.

Dadurch wird erreicht, dass aus dem prädizierten Verlauf das Suchgebiet für die Rohrleitung eingegrenzt wird und das Detektions-Verfahren dadurch schneller ausgeführt werden kann. Ferner kann das Such-Verfahren dadurch robuster gegenüber einzelnen Fehlern oder Ungenauigkeiten bei der Erfassung der Messdaten sein.

Es ist besonders günstig, wenn die dritte Flugbahn automatisch festgelegt wird. Besonders bevorzugt erfolgt dies autonom mittels einer Rechenvorrichtung der Erfassungsvorrichtung.

Die Erfassungsvorrichtung umfasst bevorzugt einen Speicher, in welchem eine Umgebungskarte gespeichert ist.

Die Positionsdaten der Erfassungsvorrichtung können die geographische Länge, Breite und Höhe, sowie die Roll-, Nick- und Gier-Winkel der Erfassungsvorrichtung um deren Längs-, Quer- und Vertikalachse umfassen.

In einer Weiterbildung der Erfindung ist es vorgesehen, dass die Flugtrajektorie keine Winkeländerungen hinsichtlich der Orientierung der Erfassungsvorrichtung aufweist.

Dadurch wird erreicht, dass insbesondere mittels VTOL UAVs auf einfache Weise und mittels effizienter Suchmuster ein zu untersuchendes Gebiet vermessen können. Außerdem kann ein von der luftgestützten Erfassungsvorrichtung umfasster Sensor besser an die Durchführung der Detektion der Rohrleitung angepasst werden, beispielsweise durch eine Ausrichtung des Sensors in einem günstigen Winkel bezüglich des bereits detektierten Verlaufs der Rohrleitung, sowie in einem günstigen Winkel hinsichtlich der Fluglage der Erfassungsvorrichtung. Die Fluglage kann von der Fluggeschwindigkeit oder einem Flugmanöver abhängen. Die Erfassungsgenauigkeit kann dadurch weiter verbessert werden, da das Erfassungssichtfeld des Sensors optimal an die Fluglage und die Lage der Rohrleitung angepasst werden kann.

In einer Weiterbildung der Erfindung ist es vorgesehen, dass die Flugtrajektorie nur Winkeländerungen hinsichtlich der Orientierung der Erfassungsvorrichtung um ihre Vertikalachse aufweist. Mit anderen Worten sind keine Roll- und Nick-Winkel der luftgestützten Erfassungsvorrichtung vorgesehen, was beispielsweise von einer Helikopter-Drohne mit mehreren Rotoren sehr einfach ausgeführt werden kann. Durch die Drehung der Orientierung der Erfassungsvorrichtung um ihre Vertikalachse kann erreicht werden, dass das Erfassungssichtfeld des vorher genannten Sensors besser an die Flugtrajektorie angepasst werden kann.

Dadurch wird erreicht, dass ein von der luftgestützten Erfassungsvorrichtung umfasster Sensor, welcher entlang der Flugtrajektorie bewegt wird, noch besser an die Detektionsaufgabe angepasst werden kann und die Erfassungsgenauigkeit weiter verbessert werden kann. Ferner ist keine aufwendige Kompensation der Lage des Sensors erforderlich, welche durch Fluglagen mit entsprechenden Roll- und Nick-Winkeln entstehen können.

Die Erfindung kann weiterentwickelt werden, indem entlang der Flugtrajektorie Messdaten mit der jeweiligen Flughöhe der Erfassungsvorrichtung mittels einer Höhenmessvorrichtung erfasst werden, und aus den Messdaten die Schichtdicke der Bedeckung der Rohrleitung bestimmt wird.

Dadurch wird erreicht, dass aus der gemessenen Flughöhe und der detektieren Lage der Rohrleitung auf eine einfache Weise die Schichtdicke mit hoher Genauigkeit bestimmt werden kann, welche die Rohrleitung überdeckt.

Die erfindungsgemäße Aufgabe wird auch durch eine Luftgestützte Erfassungsvorrichtung eingangs genannter Art gelöst, wobei die Erfassungsvorrichtung eine Sensorvorrichtung und eine Positionierungsvorrichtung umfasst, und dazu eingerichtet ist, das Verfahren nach einem der vorhergehenden Ansprüche auszuführen und mittels der Sensorvorrichtung und der Positionierungsvorrichtung Messdaten, welche jeweils Detektionsinformationen und Positionsinformationen umfassen, zu erfassen.

Die Messdaten können in einem Speicher der Erfassungsvorrichtung gespeichert werden oder an eine Bodenstation durch ein drahtloses Kommunikationsmittel übertragen werden.

Die Erfindung kann weiterentwickelt werden, indem die Erfassungsvorrichtung ferner eine Rechenvorrichtung umfasst, welche dazu eingerichtet ist, die erste Flugbahn und/oder die zweite Flugbahn automatisch zu bestimmen.

Dadurch wird erreicht, dass die Detektion rasch und auf eine einfache Weise erfolgen kann.

In einer Weiterbildung der Erfindung umfasst die Erfassungsvorrichtung ferner eine Höhenmessvorrichtung, welche dazu eingerichtet ist, die Flughöhe der Erfassungsvorrichtung über der Bodenoberfläche zu erfassen und als Messdaten gespeichert werden.

Dadurch wird erreicht, dass aus der gemessenen Flughöhe und der detektieren Lage der Rohrleitung die Schichtdicke bestimmt werden kann, welche die Rohrleitung überdeckt. Die Berechnung der Schichtdicke kann durch eine Rechenvorrichtung der Erfassungsvorrichtung, als auch durch eine nachfolgende Auswertung der Messdaten außerhalb der Erfassungsvorrichtung erfolgen.

In einer bevorzugten Weiterbildung der Erfindung ist es vorgesehen, dass die Erfassungsvorrichtung dazu eingerichtet ist, aus den Messdaten jeweils die Schichtdicke der Überdeckung der Rohrleitung zu bestimmen.

Dadurch wird erreicht, dass die Schichtdicke auf eine einfache Weise mittels der Erfassungsvorrichtung mit hoher Genauigkeit bestimmt wird.

Die erfindungsgemäße Aufgabe wird auch durch ein System zur Bestimmung der Schichtdicke der Überdeckung einer Rohrleitung gelöst, wobei das System eine erfindungsgemäße Erfassungsvorrichtung umfasst, welche außerdem eine Höhenmessvorrichtung aufweist, die dazu eingerichtet ist, die Flughöhe der Erfassungsvorrichtung über der Bodenoberfläche zu erfassen und als Messdaten zu speichern, und das System ferner dazu eingerichtet ist, aus den Messdaten jeweils die Schichtdicke der Überdeckung der Rohrleitung zu bestimmen.

Dadurch wird erreicht, dass aus der gemessenen Flughöhe und der detektieren Lage der Rohrleitung die Schichtdicke bestimmt werden kann, welche die Rohrleitung überdeckt. Die Berechnung der Schichtdicke kann durch eine Rechenvorrichtung der Erfassungsvorrichtung, als auch durch eine nachfolgende Auswertung der Messdaten außerhalb der Erfassungsvorrichtung, beispielsweise von einer Bodenstation, welche mittels eines drahtlosen Kommunikationsmittels mit der Erfassungsvorrichtung zum Empfangen der Messdaten verbunden ist, oder auch offline, das heißt nach einer erfolgten Mission werden die Messdaten anschließend durch eine Auswertungsvorrichtung ausgewertet, erfolgen.

Die Erfindung wird anhand von Figuren näher erläutert. Es zeigen beispielhaft:
- Fig. 1: ein Ausführungsbeispiel einer Flugtrajektorie einer luftgestützten Erfassungsvorrichtung in einer schematischen Darstellung in einer Ansicht von oben,
- Fig. 2: einen Ausschnitt der Flugtrajektorie nach Fig. 1 in einer Seitenansicht,
- Fig. 3: ein Ausführungsbeispiel für Messdaten in einer schematischen Darstellung in einer Ansicht von oben,
- Fig. 4: ein weiteres Ausführungsbeispiel einer Flugtrajektorie in einer schematischen Darstellung in einer Ansicht von oben
- Fig. 5: eine symbolische Darstellung einer Ausführungsform für die luftgestützte Erfassungsvorrichtung,
- Fig. 6: die Lage von Rotationsachsen einer luftgestützten Erfassungsvorrichtung.

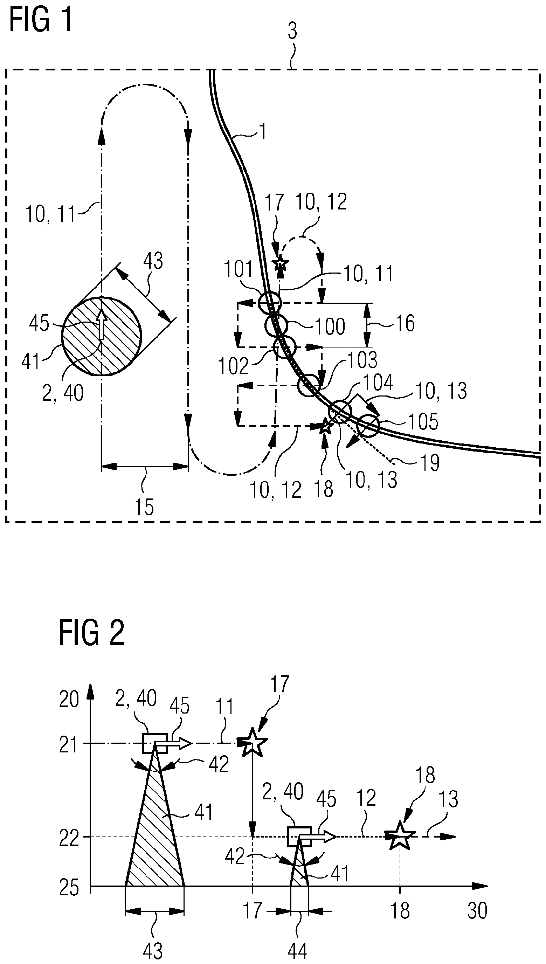

In Fig. 1 und 2 ist ein Ausführungsbeispiel für das erfindungsgemäße Verfahren zur Detektion des Verlaufs einer unterirdisch verlegten Rohrleitung 1 mittels einer luftgestützten Erfassungsvorrichtung 2 dargestellt. Es ist ein Beispiel einer Flugtrajektorie 10-13 schematisch dargestellt, welche von der luftgestützten Erfassungsvorrichtung 2 abgeflogen wird.

Die Erfassungsvorrichtung 2 folgt einer Flugtrajektorie 10, welche aus mehreren Flugbahnen 11-13 zusammengesetzt ist, welche automatisch während der Mission bestimmt werden.

Als Mission wird die Detektion des Verlaufs einer unterirdisch verlegten Rohrleitung mit einer hohen Genauigkeit verstanden.

Entlang der Flugtrajektorie 10 erfasst die Erfassungsvorrichtung 2 Messdaten 100-105, welche jeweils Detektionsinformationen und Positionsinformationen umfassen.

Die Detektionsinformationen beschreiben jeweils das Vorhandensein der Rohrleitung 1 an einem Ort, und Positionsinformationen beschreiben die Position des Orts.

Das Vorhandensein der Rohrleitung kann beispielsweise durch ein Messwert-Maximum eines entsprechenden Sensorsignals eines Sensors beschrieben werden, welches Sensorsignal bei Überfliegen der Rohrleitung 1 von der Erfassungsvorrichtung erfasst und aufgezeichnet wird und an einem Ort des Sensors vertikal über der Rohrleitung 1 ein Maximum erreicht.

Die Flugtrajektorie 10 ist vorerst durch eine erste Flugbahn 11 definiert, welche die Erfassung von Messdaten 100-105 innerhalb eines vordefinierten Gebiets 3 erlaubt und die erste Flugbahn 11 in einer ersten Flughöhe 31 durchgeführt wird. Die Flugtrajektorie 10 hat in diesem Beispiel einen mäanderförmigen Verlauf, um das Gebiet 3 effizient durch die luftgestützte Erfassung der Messdaten 100-105 abzufliegen.

Die erste Flugbahn 11 kann nach einer Festlegung des Gebiets 3 automatisch berechnet werden, und entweder durch die Erfassungsvorrichtung 2 selbst oder an diese übertragen werden.

Während des Betriebs der luftgestützten Erfassung entlang der ersten Flugbahn 11 werden kontinuierlich Messdaten erfasst, deren jeweilige Positionsinformationen untereinander einen durchschnittlichen ersten Abstand 15 aufweisen.

Der erste Abstand 15 bezeichnet benachbart liegende Messpunkte 100-105 auf der ersten Flugbahn 11, welche nicht im kontinuierlichen Verlauf der Messung aufeinander folgen. Mit anderen Worten kann der Abstand 15 quer zur mäanderförmigen ersten Flugbahn 11, gemessen werden.

Bei Detektion des Vorhandenseins der Rohrleitung 1 mittels entsprechender Detektionsinformationen wird die erste Flugbahn 11 der Flugtrajektorie 10 durch eine zweite Flugbahn 12 ersetzt. Die Detektionsinformationen repräsentieren beispielsweise eine Information eines magnetischen Sensors, welcher von der Erfassungsvorrichtung 2 umfasst ist. Dabei kann die Detektionsinformationen ein maximaler Sensorwert sein, wenn die Rohrleitung 1 überflogen wird. Bei Überschreiten beispielsweise eines vordefinierten Grenzwerts für den Sensorwert erfolgt eine Detektion.

Entlang der Flugtrajektorie 10-13 werden somit Messdaten 100-105 erfasst, aus deren jeweiligen Detektionsinformationen bei Überschreiten eines Grenzwerts das Vorhandensein der Rohrleitung 1 detektiert wird. Aus den entsprechenden Positionsinformationen kann der Verlauf der Rohrleitung 1, beispielsweise mittels eines statistischen Verfahrens, ermittelt werden.

Wie in Fig. 1 und 2 dargestellt, werden zunächst Messdaten 100 durch Detektion erfasst, wobei der Ort der Detektion der Messdaten 100 ein erster Flugbahnwechselpunkt 17 ist, an welchem von der ersten Flugbahn 11 in die zweite Flugbahn 12 gewechselt wird.

Die Flugbahnen 11, 12 unterscheiden sich jeweils im Verlauf und in der Flughöhe 20.

Die zweite Flugbahn 12 wird in diesem Beispiel in einer zweiten Flughöhe 22 durchgeführt, wobei die erste Flughöhe 21 höher ist als die zweite Flughöhe 22. Die zweite Flugbahn 12 beginnt am Ort der Detektion der Messdaten 100, also am ersten Flugbahnwechselpunkt 17.

Der Sensor 40 weist einen Sensormessbereich 41 mit einem Öffnungswinkel des Messbereichs 42 auf, welcher in Aufsicht durch eine kreisrunde Detektions-Charakteristik beschrieben werden kann. Je nach aktueller Flughöhe 20 entlang der Flugtrajektorie 10-13 in Bewegungsrichtung des Sensors 45 ist der Durchmesser des Boden-Messbereichs 43, 44 auf der Bodenoberfläche 25 und je nach verwendetem Sensortyp für den Sensor 40 kann die Messempfindlichkeit und/oder Messgenauigkeit unterschiedlich groß sein.

Entlang der zweiten Flugbahn 12 werden kontinuierlich Messdaten 100-105 erfasst, deren jeweilige Positionsinformationen untereinander einen durchschnittlichen zweiten Abstand 16 aufweisen.

Der erste Abstand 15 ist in diesem Beispiel größer als der zweite Abstand 16.

Durch den engeren Verlauf der mäanderförmigen zweiten Flugbahn 12 kann das Gebiet um den ersten detektierten Ort mit Messdaten 101 genauer untersucht und erfasst werden.

Im gezeigten Beispiel werden die Messdaten 101-105 jeweils durch Detektion, das heißt wenn die Messdaten 101-105 einen vordefinierten Grenzwert überschreiten, erfasst.

Erfolgt über eine vordefinierte Entfernung entlang der zweiten Flugbahn 12 keine weitere Erfassung von Messdaten, so kann eine neue Suchstrategie ermittelt werden. Beispielsweise kann aus dem bisher ermittelten Verlauf der Rohrleitung 1 der weitere Verlauf 19 der Rohrleitung 1 extrapoliert werden.

Damit wird eine dritte Flugbahn 13 ab einem zweiten Flugbahnwechselpunkt 18 festgelegt, und die zweite Flugbahn 12 durch die dritte Flugbahn 13 am zweiten Flugbahnwechselpunkt 18 ersetzt. In diesem Beispiel bleibt die Flughöhe 20 der dritten Flugbahn 13 gegenüber der Flughöhe 22 der zweiten Flugbahn 12 unverändert.

Die dritte Flugbahn 13 kann beispielsweise ein weiterer mäanderförmiger Verlauf sein, welcher jedoch einen geänderten Winkel der dritte Flugbahn 13 gegenüber der vorhergehenden zweiten Flugbahn 12 aufweist, beispielsweise um 45° oder 90° ab dem zweiten Flugbahnwechselpunkt 18. Ferner kann der Bahnabstand der mäanderförmigen Flugbahn neuerlich verringert werden. Dadurch kann erreicht werden, dass die Rohrleitung bezüglich des von der Erfassungsvorrichtung umfassten Sensors eine verbesserte Lage zueinander aufweist und der Sensor ein verbessertes Messergebnis mittels der Messdaten 100-105 liefern kann.

Für eine präzise Erfassung der Messdaten 100-105 mittels des genannten Sensors weist die Flugtrajektorie 10-13 keine Winkeländerungen hinsichtlich der Orientierung der Erfassungsvorrichtung 2 auf. Dies ist insbesondere dann günstig, wenn als Erfassungsvorrichtung 2 ein VTOL-UAV, beispielsweise ein Drehflügler in Form eines Quadcopters, eingesetzt wird. Somit kann die Flugtrajektorie 10-13 nur Winkeländerungen hinsichtlich der Orientierung der Erfassungsvorrichtung 2 um ihre Vertikalachse 62, der Gierachse 62, aufweisen, was die Präzision besonders unterstützt, da die Mess- oder Detektionsgenauigkeit bei der sensorischen Erfassung der Messdaten 100-105 auch von der Bewegungs- beziehungsweise Flugrichtung des Sensors abhängen kann. Folglich wird das VTOL-UAV bei jeder Änderung der Flugbahn um die Gierachse 62 gedreht, um den Sensor für eine präzise Messung auszurichten.

Die Beträge für den Rollwinkel 71, den Nickwinkel 72 und den Gierwinkel 73 im Flug hängen von der Art der luftgestützten Plattform der Erfassungsvorrichtung 2 ab. Bei VTOL-UAVs können der Rollwinkel 71 und der Nickwinkel 72 in einer horizontalen Ebene gelegen sein.

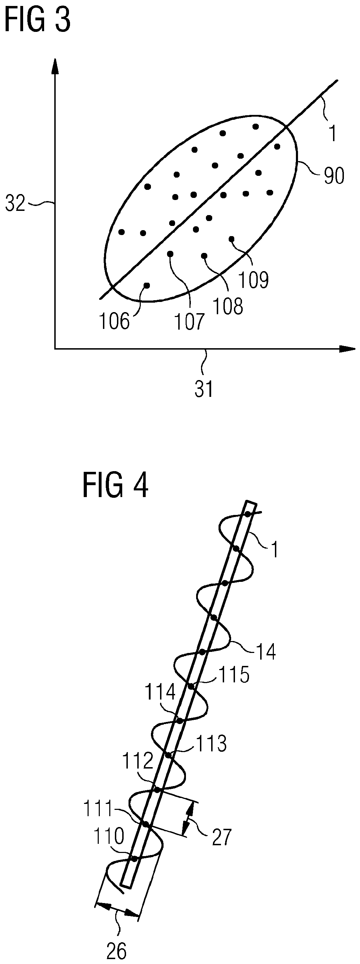

Fig. 3 zeigt eine Darstellung von mehreren Messdaten 106-109 über die geographische Breite 31 und die geographische Länge 32. Dabei können die Messdaten 106-109 innerhalb einer Ellipse 90 gruppiert werden. Aus der Darstellung kann die Hauptachse der Ellipse 90 ermittelt werden, welche zur Extrapolation eines weiteren Verlaufs von Messdaten 106-109 gemäß den vorhergehenden Ausführungen zur Bestimmung der Verlaufs 19 verwendet werden kann. Natürlich sind andere bekannte Verfahren zur statistischen Extrapolation einsetzbar.

Fig. 4 zeigt eine Flugbahn 14, die automatisch von der Rechenvorrichtung 4 ermittelt werden kann, indem in einer sinusförmigen Flugbahn 14 mit einer Suchbreite 26 und einer Suchtiefe 27 der weitere Verlauf der Rohrleitung 1 durch Messdaten 110-115 ermittelt wird. Die Suchbreite 26 und die Suchtiefe 27 beschrieben die Einhüllende der Flugbahn 14 innerhalb eines Zyklus, welcher im Zuge der Suche beispielsweise entlang eines prognostizierten Verlaufs 19 wiederholt wird.

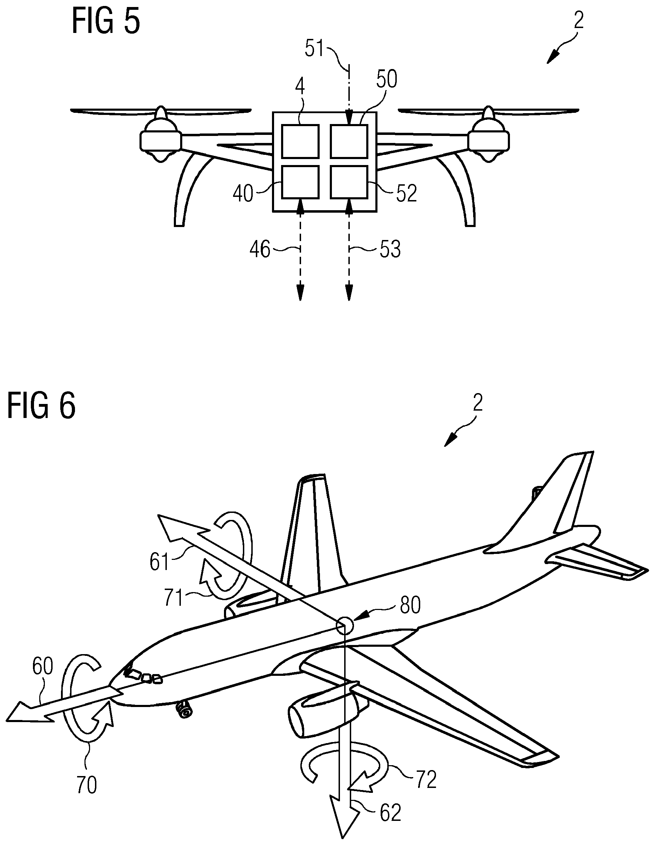

Fig. 5 stellt die luftgestützte Erfassungsvorrichtung 2 in Form eines MAV dar, welche eine Sensorvorrichtung 40 und eine Positionierungsvorrichtung 50 umfasst. Am MAV sind Rotorflügel erkennbar, welche schematisch einen autonom fliegenden Quadcopter darstellen sollen.

Mittels der Sensorvorrichtung 40 und der Positionierungsvorrichtung 50 können Messdaten 100-115, welche jeweils Detektionsinformationen und Positionsinformationen umfassen, erfasst werden.

Die Sensorvorrichtung 40 ist beispielsweise ein Magnetsensor, welcher dazu eingerichtet ist, ein von der Rohrleitung 1 erzeugtes Magnetfeld zu erfassen. Die Positionierungsvorrichtung 50 ist beispielsweise ein GPS-Satellitenempfänger zum Empfang eines GPS-Signals 51. Zur Erhöhung der Positionierungsgenauigkeit kann zusätzlich ein differenzielles Subsystem zur Positionierung (Differential GPS) eingesetzt werden, welches von der Positionierungsvorrichtung 50 umfasst ist.

Die Erfassungsvorrichtung 2 umfasst ferner eine Rechenvorrichtung 4, welche dazu eingerichtet ist, die Flugbahn 10-14 automatisch zu bestimmen.

Außerdem umfasst die Erfassungsvorrichtung 2 eine Höhenmessvorrichtung 52, beispielsweise ein Laserhöhenmesser, welcher mittels einem Höhenmess-Signal 53 die Flughöhe 20-22 über der Bodenoberfläche 25 bestimmt und als Messdaten 100-115 gespeichert werden.

Die Messdaten 100-115 können in einem Speicher (in der Figur nicht dargestellt) der Erfassungsvorrichtung 2 gespeichert werden oder an eine Bodenstation durch ein drahtloses Kommunikationsmittel übertragen werden (in der Figur nicht dargestellt).

Aus der gemessenen Flughöhe und der detektieren Lage der Rohrleitung 1 kann die Schichtdicke der Schicht bestimmt werden kann, welche die Rohrleitung 1 überdeckt. Die Berechnung der Schichtdicke kann automatisch durch die Rechenvorrichtung 4 der Erfassungsvorrichtung 2 erfolgen. Dazu kann es vorgesehen sein, dass von der Erfassungsvorrichtung 2 eine Karte abrufbar ist, welche Informationen bezüglich der Bodenbeschaffenheit im Gebiet der Rohrleitung 1 aufweist, um eine entsprechende Berechnung mit hoher Genauigkeit durchzuführen.

Fig. 6 zeigt die Lage von Rotationsachsen einer luftgestützten Erfassungsvorrichtung 2, wobei ein Rollwinkel 70 um eine Längsachse 60, ein Nickwinkel 71 um eine Querachse 61 und ein Gierwinkel 72 um eine Vertikalachse 62 erkennbar ist. Die Achsen 60, 61 und 62 schneiden sich in einem Schwerpunkt 80.

Für die Erfindung sind sowohl Drehflügelflugzeuge als auch Flugzeuge ohne Rotorflügel geeignet.

### Bezugszeichenliste:

- 1: Rohrleitung
- 2: Erfassungsvorrichtung
- 3: Gebiet
- 4: Rechenvorrichtung
- 10-14: Flugtrajektorie, Flugbahn
- 15, 16: Abstand
- 17, 18: Flugbahnwechselpunkt
- 19: Extrapolierter Verlauf
- 20-22: Flughöhe
- 25: Bodenoberfläche
- 26: Suchbreite
- 27: Suchtiefe
- 30: Entfernung, zurückgelegte Distanz
- 31: geographische Breite
- 32: geographische Länge
- 40: Sensor
- 41: Sensormessbereich, Aufsicht
- 42: Öffnungswinkel des Messbereichs
- 43, 44: Messbereich, Durchmesser am Boden
- 45: Bewegungsrichtung des Sensors
- 46: Sensor-Signal
- 50: GPS-Positionierungsempfänger
- 51: GPS-Signal
- 52: Höhenmessvorrichtung
- 53: Höhenmess-Signal
- 60: Längsachse
- 61: Querachse
- 62: Vertikalachse
- 70: Rollwinkel
- 71: Nickwinkel
- 72: Gierwinkel
- 80: Schwerpunkt
- 90: Ellipse
- 100-115: Messdaten

## Patentansprüche

1. Verfahren zur Detektion des Verlaufs einer unterirdisch verlegten Rohrleitung (1) mittels einer luftgestützten Erfassungsvorrichtung (2),
**dadurch gekennzeichnet, dass** sich die Erfassungsvorrichtung (2) längs einer Flugtrajektorie (10-14) bewegt und entlang der Flugtrajektorie (10-14) Messdaten (100-115), welche jeweils Detektionsinformationen und Positionsinformationen umfassen, erfasst,
wobei die Detektionsinformationen das Vorhandensein der Rohrleitung (1) an einem Ort beschreiben, und die Positionsinformationen die Position des Orts beschreiben,
und die Flugtrajektorie (10-14) durch eine erste Flugbahn (11) definiert ist, welche die Erfassung von Messdaten (100-115) innerhalb eines vordefinierten Gebiets (3) erlaubt und bei Detektion des Vorhandenseins der Rohrleitung (1) mittels entsprechender Detektionsinformationen die erste Flugbahn (11) der Flugtrajektorie durch eine zweite Flugbahn (12) ersetzt wird.

2. Verfahren nach dem vorhergehenden Anspruch, wobei die erste Flugbahn (11) und/oder die zweite Flugbahn (12) automatisch bestimmt wird.

3. Verfahren nach einem der vorhergehenden Ansprüche,
wobei entlang der ersten Flugbahn (11) Messdaten (100-115) erfasst werden, deren jeweilige Positionsinformationen untereinander einen durchschnittlichen ersten Abstand (15) aufweisen,
und entlang der zweiten Flugbahn (12) Messdaten (100) erfasst werden, deren jeweilige Positionsinformationen untereinander einen durchschnittlichen zweiten Abstand (16) aufweisen,
wobei der erste Abstand (15) größer als der zweite Abstand (16) ist.

4. Verfahren nach einem der vorhergehenden Ansprüche,
wobei die erste Flugbahn (11) in einer ersten Flughöhe (21) durchgeführt wird,
und die zweite Flugbahn (12) in einer zweiten Flughöhe (22) durchgeführt wird,
wobei vorzugsweise die erste Flughöhe (21) höher ist als die zweite Flughöhe (22).

5. Verfahren nach einem der vorhergehenden Ansprüche, wobei entlang der Flugtrajektorie (10-14) Messdaten (100-115) erfasst werden, aus deren jeweiligen Detektionsinformationen bei Überschreiten eines jeweiligen Grenzwerts das Vorhandensein der Rohrleitung (1) detektiert wird und aus den entsprechenden Positionsinformationen der Verlauf der Rohrleitung (1) ermittelt wird, vorzugsweise mittels einem statistischen Verfahren.

6. Verfahren nach dem vorhergehenden Anspruch, wobei aus dem ermittelten Verlauf der Rohrleitung (1) der weitere Verlauf (19) der Rohrleitung (1) extrapoliert wird und daraus eine dritte Flugbahn (13) festgelegt wird, und die erste Flugbahn (11) oder die zweite Flugbahn (12) durch die dritte Flugbahn (13) ersetzt wird, bevorzugt automatisch und besonders bevorzugt mittels einer Rechenvorrichtung (4) der Erfassungsvorrichtung (2).

7. Verfahren nach einem der vorhergehenden Ansprüche, wobei die Flugtrajektorie (10-14) keine Winkeländerungen hinsichtlich der Orientierung der Erfassungsvorrichtung (2) aufweist.

8. Verfahren nach einem der vorhergehenden Ansprüche, wobei die Flugtrajektorie (10-14) nur Winkeländerungen hinsichtlich der Orientierung der Erfassungsvorrichtung (2) um ihre Vertikalachse (62) aufweist.

9. Verfahren nach einem der vorhergehenden Ansprüche, wobei entlang der Flugtrajektorie (10-14) Messdaten (100-115) mit der jeweiligen Flughöhe (20-22) der Erfassungsvorrichtung (2) mittels einer Höhenmessvorrichtung (52) erfasst werden, und aus den Messdaten (100-115) die Schichtdicke der Bedeckung der Rohrleitung (1) bestimmt wird.

10. Luftgestützte Erfassungsvorrichtung (2) zur Detektion des Verlaufs einer unterirdisch verlegten Rohrleitung (1), **dadurch gekennzeichnet, dass** die Erfassungsvorrichtung (2) eine Sensorvorrichtung (40) und eine Positionierungsvorrichtung (50) umfasst, und dazu eingerichtet ist, das Verfahren nach einem der vorhergehenden Ansprüche auszuführen und mittels der Sensorvorrichtung (40) und der Positionierungsvorrichtung (50) Messdaten (100-115), welche jeweils Detektionsinformationen und Positionsinformationen umfassen, zu erfassen.

11. Erfassungsvorrichtung (2) nach dem vorhergehenden Anspruch, wobei die Erfassungsvorrichtung (2) ferner eine Rechenvorrichtung (4) umfasst, welche dazu eingerichtet ist, die erste Flugbahn (11) und/oder die zweite Flugbahn (12) automatisch zu bestimmen.

12. Erfassungsvorrichtung (2) nach den Ansprüchen 10 oder 11, wobei die Erfassungsvorrichtung (2) ferner eine Höhenmessvorrichtung (51) umfasst, welche dazu eingerichtet ist, die Flughöhe (20, 21, 22) der Erfassungsvorrichtung (2) über der Bodenoberfläche (25) zu erfassen und als Messdaten (100-115) gespeichert werden.

13. Erfassungsvorrichtung (2) nach dem vorhergehenden Anspruch, wobei die Erfassungsvorrichtung (2) dazu eingerichtet ist, aus den Messdaten (100-115) jeweils die Schichtdicke der Überdeckung der Rohrleitung (1) zu bestimmen.

14. System zur Bestimmung der Schichtdicke der Überdeckung einer Rohrleitung (1), **dadurch gekennzeichnet, dass** das System eine Erfassungsvorrichtung (2) nach Anspruch 12 umfasst, und das System dazu eingerichtet ist, aus den Messdaten (100-115) jeweils die Schichtdicke der Überdeckung der Rohrleitung (1) zu bestimmen.
